# EUROPEAN PATENT APPLICATION

(11) **EP 1 998 242 A1**
(43) Veröffentlichungstag der Anmeldung: **03.12.2008**
(21) Anmeldenummer: 07747819.6
(22) Anmeldetag: 16.02.2007
(51) Int. Cl.: G06F 1/16, G06F 3/14

(54) **VISUELLE INFORMATIONSANZEIGEVORRICHTUNG (VARIANTEN)**

(30) Priorität: 22.02.2006 RU 2006105414
(71) Anmelder: Vlasov, Andrey Igorevich, Moscow 123317 (RU); Timonin, Mikhail Alexandrovich, Moscow 125466 (RU)
(72) Erfinder: Vlasov, Andrey Igorevich, Moscow 123317 (RU); Timonin, Mikhail Alexandrovich, Moscow 125466 (RU)
(74) Vertreter: Jeck, Anton
(86) Internationale Anmeldenummer: PCT/RU2007/000078
(87) Internationale Veröffentlichungsnummer: WO 2007/097662

(57) **Zusammenfassung**

Die Erfindung betrifft ein Bildschirmgerät mit einem festen Gehäuse, in das ein Bildschirm, eine Steuereinheit mit einem Logikprozessor, ein Arbeitsspeicher, ein Festspeicher, ein mit dem Bildschirm verbundener Adapter, Funktionsbaugruppen und die mit der Steuereinheit verbundenen drahtlosen Endgeräte eingebaut sind, wobei die Funktionsbaugruppen mindestens ein Mikrophon, einen Lautsprecher, eine Videokamera, einen infrarotanschluss zum Empfang von Signalen, Befehlen und Bilderdateien zu ihrer Wiedergabe von einem Fernbedienungsteil aus umfassen. Ist dabei vorgesehen, dass es mit einem zweiten Bildschirm und mit Anschlüssen versehen ist, die zum Anschließen von externen Steuer- und Peripherieeinrichtungen dienen, dass die Steuer- und Peripherieeinrichtungen mit der Steuereinheit verbunden und am gleichen Gehäuse angebracht sind, und dass der Adapter innerhalb des Gehäuses angeordnet ist, wobei das Gehäuse mit zwei gegenüberliegenden Platten ausgebildet ist und auf jeder Platte Aufnahmestellen zum Einbau von mindestens einem Bildschirm und der Funktionsbaugruppen vorgesehen sind, dann wird insbesondere die Konstruktion des Bildschirmgerätes vervollständigt und das Wahrnehmungsfeld der auf de Bildschirm wiedergegebenen Information erweitert. Dies kann durch vier verschiedene Konstruktionen des Bildschirmgerätes erreicht werden.

## Beschreibung

Die Erfindung bezieht sich auf ein Bildschirmgerät nach dem Oberbegriff des Anspruches 1.

Das Bildschirmgerät kann zur Wiedergabe von Bildinformationen eingesetzt werden, z. B. bei Werbeanlagen, wie sie an öffentlichen Orten, in Verkaufs- und Handelsräumen und im Verkehr angewendet werden.

Bekannt ist ein Bildschirmgerät, das einen Bildschirm, einen Logikprozessor, mit dem Logikprozessor verbundene Funktionsbaugruppen und einen Eingabeteil zur Benutzerkommunikation mit dem Logikprozessor aufweist. Der Logikprozessor ist mit dem Bildschirm verbunden und mit einem Digitalspeicher und einem digitalen Mikroprozessorgerät ausgerüstet (US Nr. 2002/0042741 A1, Veröffentl. 11.04.2002).

Der Mangel der bekannten Vorrichtung besteht in der Notwendigkeit der Informationseingabe durch den Benutzer. Somit ist eine Informationseingabe durch drahtlose Endgeräte und deren Wiedergabe nicht möglich.

Bekannt ist auch ein Bildschirmgerät mit einem festen Gehäuse, in dem ein Bildschirm mit einer Mikroprozessorsteuereinheit, ein Adapter und Funktionsbaugruppen eingebaut sind. Die Funktionsbaugruppen enthalten mindestens ein Mikrophon, einen Lautsprecher, eine Videokamera, einen Infrarotanschluss zum Empfang von Signalen, Befehlen und Bildern zur Wiedergabe von einem Fernbedienungsteil. Das Bildschirmgerät enthält auch die mit der Mikroprozessorsteuereinheit verbundenen drahtlosen Kommunikationsmittel. Diese Vorrichtung ermöglicht es, die Information von einem entfernten Informationsanbieter mittels drahtloser Endgeräte zu empfangen (US Nr. 2004/0044574 A1, Veröffentl. 04.03.2004) (Prototyp).

Dennoch besteht der Mangel des bekannten Bildschirmgerätes darin, dass das Wahrnehmungsfeld der auf dem Bildschirm wiedergegebenen Information auf die Zone unmittelbar vor dem Bildschirm beschränkt ist.

Bekannt sind Bildschirmgeräte (Laptops), welche aus zwei miteinander mechanisch gekoppelten Gehäusen bestehen. Jedes Gehäuse weist einen Bildschirm, eine Steuereinheit, einen Logikprozessor, einen Arbeitsspeicher, einen Festwertspeicher, einen mit dem Bildschirm verbundenen Adapter, Funktionsbaugruppen und die mit der Steuereinheit verbundenen drahtlosen Endgeräte auf. Die Funktionsbaugruppen enthalten mindestens ein Mikrophon, einen Lautsprecher, eine Videokamera, einen Infrarotanschluss zum Empfang von Signalen, Befehlen und Bilderdateien zur Wiedergabe vom Fernbedienungsteil (US Nr. 2002/0109662 Veröffentl. 15.08.2002; A1, US Nr. 200410051679 A1, Veröffentl. 18.03.2004; US Nr. 2003/0043182 Veröffentl. 06.03.2003; DE 4204326 Veröffentl. 27.08.1992).

Die bekannten Bildschirmgeräte werden bei Geschäftspräsentationen eingesetzt.

Der Mangel dieser Bildschirmgeräte besteht darin, dass das Wahrnehmungsfeld der auf dem Bildschirm wiedergegebenen Information beschränkt ist. Die Gehäuse mit den darin eingebauten Bildschirmen werden mittels Scharnierhalterung befestigt. Beim Einrichten einer Werberessource werden große Bildschirme eingesetzt. Infolgedessen verringert sich die Zweckmäßigkeit der Anwendung dieser Bildschirmgeräte, denn sie sind baulich kompliziert. Die exakte Positionierung der die Bildschirme tragenden Gehäuse mittels Scharnierhalterung verkompliziert die Konstruktion, erhöht den Ausführungsaufwand und ist damit wirtschaftlich nicht begründet.

Bekannt ist ein Bildschirmgerät, dessen Gehäuse aus einem durchsichtigen Werkstoff ausgebildet ist. Die Strecke zwischen dem Gehäuse und dem Chassis, in dem die Hauptvorrichtungen und -elemente eingebaut sind, ist zum Anbringen von Werbung und Informationen bestimmt, welche auf einem Papierträger vorgelegt werden (FR 1816093 A1 Veröffentl. 03.05.2002).

Eine solche Gehäuseausführung kann das Gerät nicht vor den negativen Auswirkungen der Umwelt schützen, denn der Bildschirm und die Funktionsbaugruppen sind in unmittelbarem Kontakt.

Ausgehend von diesem Stand der Technik liegt der Erfindung die Aufgabe zugrunde die Konstruktionen der Bildschirmgeräte zu vervollständigen, das Wahrnehmungsfeld der auf dem Bildschirm wiedergegebenen Informationen zu erweitern, den autonomen Betrieb der Vorrichtung sicherzustellen und die verschiedenen Verfahren der Videoinformationsaufnahme zwecks Wiedergabe und Sicherstellung der Kombinationsmöglichkeit zu kombinieren. Dabei soll die interaktive Kommunikation mit Zuschauern, ein Netzaufbau aufgrund eines drahtloses Informationsaustausches, die Wiedergabe von verschiedenartigen Informationen (statischen, animierten, Video-), der Empfang von kodierten Fernsehsignalen, die Inforationswiedergabe anhand von DVDs und Flash-Speichern, eine Datenkommunikation mit dem Server über ein drahtloses Kommunikationskanal und eine Datenkommunikation im Funknetz sichergestellt sein.

Die gestellte Aufgabe wird durch die Merkmale des Anspruches 1, 10, 19 und 28 für vier verschiedene Ausgestaltungen des Bildschirmgerätes gelöst.

Weitere zweckmäßige und vorteilhafte Maßnahmen der Erfindung gehen aus den diesen Ansprüchen zugeordneten Unteransprüchen hervor.

Das Bildschirmgerät nach jeder der Ausführungsform I bis IV kann mit einem Energiespeicher und einer unabhängigen Stromversorgung in Form von z. B. Sonnenbatterien versehen werden. Damit wird eine Unabhängigkeit von einem Stromnetz erreicht. Die in den Ansprüchen 1, 10, 19 und 28 aufgezählten Merkmale bilden aufgrund der Ursache-Wirkungs-Beziehung zusammen eine Gesamtheit von wesentlichen Merkmalen, welche ausreichend ist, um die gestellten Aufgaben fortschrittlich zu lösen. Zudem sind diese Merkmale dem Stand der Technik nicht zu entnehmen und sie werden durch diesen auch nicht nahe gelegt. Die beanspruchten Merkmalsgruppen haben daher als neu zu gelten und der technische Fortschritt ist durch die gelösten Probleme unverkennbar.

Ausführungsbeispiele der Erfindung sind in den Zeichnungen schematisch dargestellt. Es zeigen:
- Fig. 1: den Übersichtsplan des Bildschirmgerätes nach der Ausführungsform I, ,
- Fig. 2: in Seitenansicht das Bildschirmgerät nach der Ausführungsform I,
- Fig. 3: das Blockschaltbild des Bildschirmgerätes nach den Ausführungsformen I bis IV,
- Fig. 4 und 5: Gehäuse der Bildschirmgeräte nach der Ausführungsform I - Modell A und nach der Ausführungsform II - Modell C,
- Fig. 6 und 7: Gehäuse der Bildschirmgeräte nach der Ausführungsform I - Modell B und nach der Ausführungsform II - Modell D,
- Fig. 8: den Obersichtsplan des Bildschirmgerätes nach der Ausführungsform II,

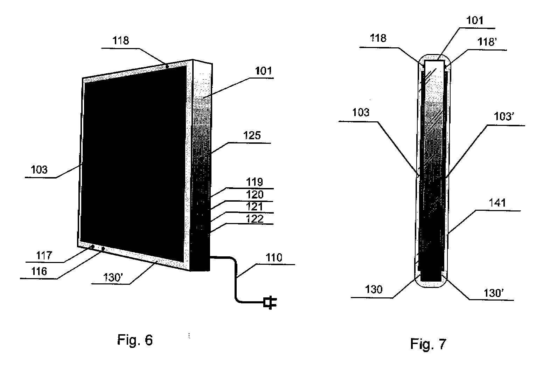

- Fig. 7: in Seitenansicht das Bildschirmgerät nach der Ausführungsform II - Modell B

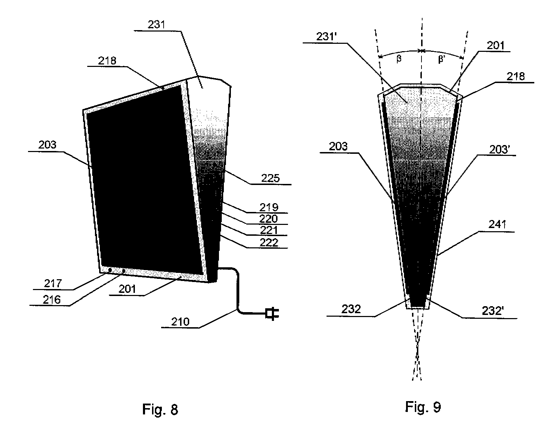

- Fig. 8: den Übersichtsplan des Bildschirmgerätes nach der Ausführungsform II,
- Fig. 9: die Seitenansicht des Bildschirmgerätes nach der Ausführungsform II,

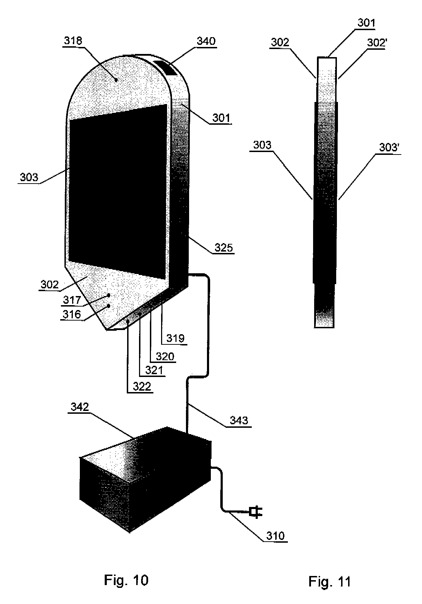

- Fig. 10: den Übersichtsplan des Bildschirmgerätes nach der Ausführungsform III,
- Fig. 11: die Seitenansicht des Bildschirmgerätes nach der Ausführungsform III,

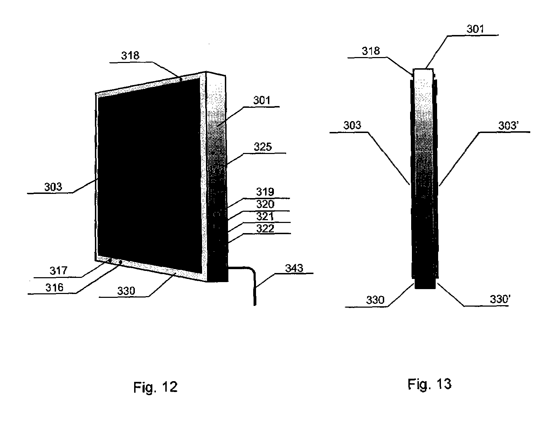

- Fig. 12: das erste Gehäuse des Bildschirmgeräts nach der Ausführungsform III - Modell E und nach der Ausführungsform IV - Modell F,
- Fig. 13: die Seitenansicht des Bildschirmgerätes nach Fig. 12,

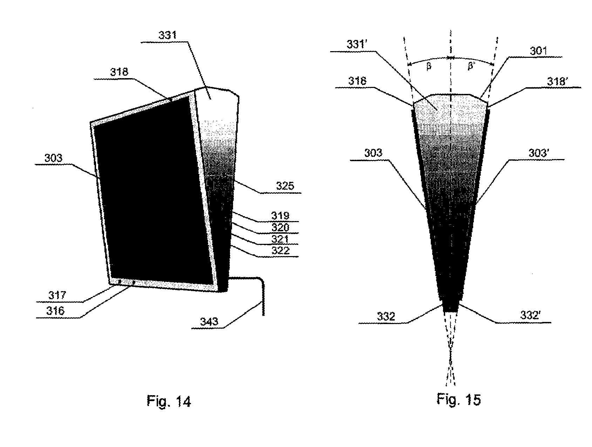

- Fig. 14: das erste Gehäuse des Bildschirmgeräts nach Ausführungsform III - Modell F und nach der Ausführungsform IV - Modell H,
- Fig. 15: die Seitenansicht des Bildschirmgerätes nach Fig. 14,

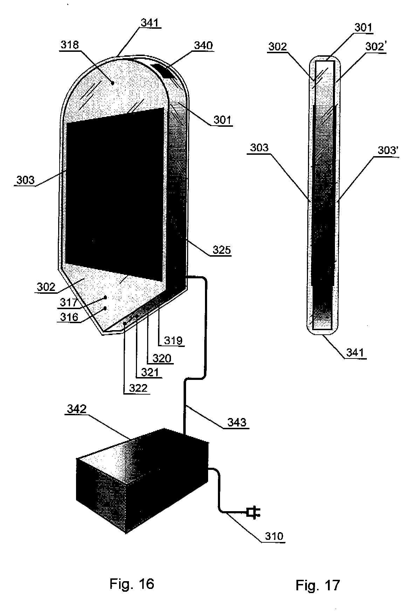

- Fig. 16: den Übersichtsplan des Bildschirmgerätes nach der Ausführungsform IV und
- Fig. 17: die Seitenansicht des Bildschirmgerätes nach der Ausführungsform IV.

Die Erfindungen werden anhand von konkreten Ausführungsbeispielen näher erläutert. Diese Beispiele veranschaulichen die Möglichkeit der Erreichung des technischen Nutzeffektes durch die Gesamtheit der wesentlichen Merkmale.

### Ausführungsform I

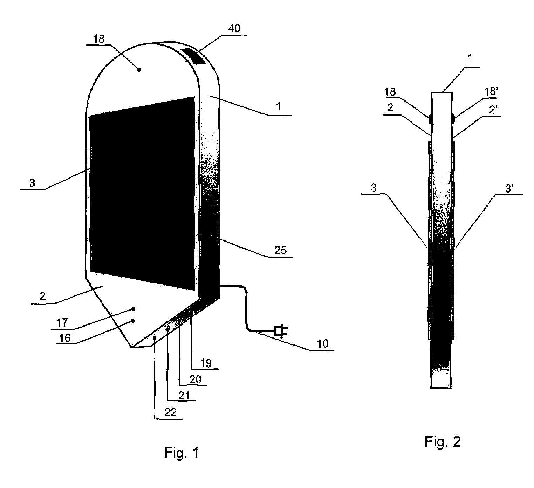

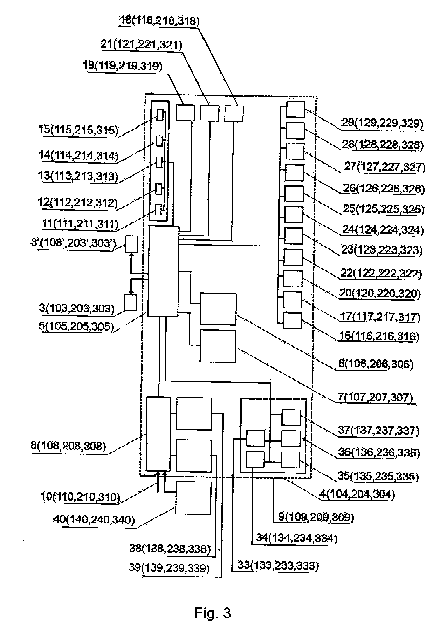

Das Bildschirmgerät weist ein festes Gehäuse 1 auf (Fig. 1 und 2). Das Gehäuse 1 hat zwei gegenüberliegende Platten 2 und 2'. Jede der Platten 2 und 2' ist mit Aufnahmestellen zum Einbau von Bildschirmen 3 und 3' ausgeführt. Das Gehäuse 1 kann eine beliebige Geometrie aufweisen. In das Gehäuse 1 sind folgende Baugruppen eingebaut:
- eine Steuereinheit 4 (Fig. 3) mit einem Logikprozessor 5, einem Arbeitsspeicher (RAM) 6 und einen Festspeicher 7. Die Steuereinheit 4 ist mit den Bildschirmen 3 und 3' verbunden;
- ein Adapter 8 und
- die mit der Steuereinheit 4 verbundenen drahtlosen Endgeräte 9.

Der Adapter 8 ist zum Abspannen, Gleichrichten und Stabilisieren der in das Bildschirmgerät eingespeisten Spannung vorgesehen. Er ist mittels eines Kabels 10 mit einem Netzteil verbunden. Das Kabel 10 ist in einem Ständer (in der Zeichnung nicht angegeben) verlegt. Der Ständer dient zur Befestigung des Bildschirmgeräts. Im Gehäuse 1 sind an dem Chassis (in der Zeichnung nicht angegeben) der Steuereinheit 4 Aufnahmestellen zur Anordnung von Anschlüssen 11 bis 15 vorgesehen. Die Anschlüsse 11 bis 14 dienen zum Anschließen von externen Steuereinheiten. Der Anschluss 15 dient zum Anschließen von externen Peripheriegeräten, welche mit der Steuereinheit 4 verbunden sind. Dabei entsprechen die Form und die Abmessungen
- des Anschlusses 11 einem Mausanschluss,
- des Anschlusses 12 einem Tastaturanschluss,
- des Anschlusses 13 einem Anschluss für eine externe Speichereinheit,
- des Anschlusses 14 einem Anschluss für eine Datenein- und Datenausgabeeinrichtung, z. B. die Draht- oder Glasfaserleitung,
- des Anschlusses 15 einem Anschluss für Peripheriegeräte, z. B. einen Drucker.

Auf den Platten 2 und 2' (Fig. 1, 2 und 3) sind Aufnahmestellen angeordnet, an die folgende Funktionsbaugruppen anbaubar sind:
- ein Kapazitätsgeber 16 zur Erkennung von beweglichen Subjekten und Objekten,
- eine Photozelle 17 (oder ein Optokoppler) zur Erkennung von beweglichen Subjekten und Objekten und
- eine Videokamera 18.

Auf den Seitenflächen des Gehäuses 1 sind Aufnahmestellen angeordnet, an die mindestens folgende Funktionsbaugruppen anbaubar sind:
- ein Lautsprecher 19,
- ein Infrarotanschluss 20 zum Empfang von Signalen, Befehlen und Bilderdateien zu ihrer Wiedergabe von dem Fernbedienungsteil aus,
- ein Mikrophon 21 und
- eine RFID-Einrichtung (RFID) 22 zum Fernablesen der RFID-Magnet-Tags (Etiketten) und Chips.

Innerhalb des Gehäuses 1 (Fig. 3) können am Chassis mindestens folgende Teile montiert werden:
- ein Schwingungsgeber 23 zur Erkennung von Diebstahl- oder Sabotageversuchen (verändernde Eingriffe in das Produkt),
- ein Sensor 24 zur Kontrolle des Atmosphärendrucks,
- ein Sensor 25 zur Kontrolle der Außentemperatur,
- ein Sensor 26 zur Kontrolle der Umgebungsstrahlung,
- ein Sensor 27 zur Kontrolle der Rauchdichte der Umgebung,
- ein Sensor 28 zur biologischen Umgebungskontrolle und
- ein Sensor 29 zur chemischen Umgebungskontrolle.

Die Funktionsbaugruppen 16 bis 29 sind mit der Steuereinheit 4 verbunden.

Die Funktionsbaugruppen 16 bis 29 können in einer beliebigen Kombination eingebaut und angeschlossen werden, je nach den Gebrauchsbedingungen des Bildschirmgerätes und dessen Verwendungszweck.

Die Funktionsbaugruppen 16 bis 18 können teilweise auf der Platte 2, teilweise auf der Platte 2' und einige davon auf den beiden Platten 2 und 2' angebracht werden. Die Anordnung der Funktionsbaugruppen 16 bis 18 wird vom Benutzer bestimmt.

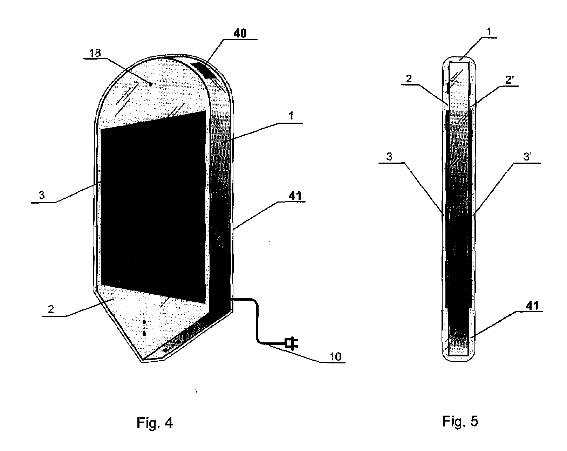

Das Gehäuse 1 kann als ein rechteckiges Parallelepiped (Fig. 4 und 5 - Modell A) ausgeführt werden. Die Bildschirme 3 und 3' sowie die Funktionsbaugruppen 16 bis 18 werden an den senkrechten Platten 30 und 30' des Parallelepipeds mit dem größtem Flächeinhalt unter allen Platten des Parallelepipeds angeordnet.

Das Gehäuse 1 kann als ein vierflächiges Prisma (Fig. 6 und 7 - Modell B) ausgebildet sein. Seine Seitenflächen 31 und 31' weisen die Form eines gleichschenkligen Trapezes auf. Die Aufnahmestellen für den Einbau der Bildschirme 3 und 3' und der Funktionsbaugruppen 16 bis 18 sind an den schrägen Platten 32 und 32' angeordnet. Diese Platten 32 und 32' kreuzen sich hypothetisch außerhalb des Gehäuses 1 und sind hinsichtlich der imaginären senkrechten Platte unter gleichen Winkeln β und β' geneigt. Dabei geht die imaginäre senkrechte Ebene durch die imaginäre Schnittlinie der Platten des Gehäuses 1 hindurch.

Die drahtlosen Endgeräte 9 (Fig. 3) können eine WiFi-Karte 33 und/oder eine WiMax-Einrichtung 34 und/oder ein GPRS-Modem 35 und/oder ein TV-Tuner 36 und/oder eine Bluetooth-Einrichtung 37 aufweisen. Die Bildschirme 3 und 3' können als LCD- oder Plasmabildschirme ausgebildet werden, welche eine flache oder eine konvex gewölbte Form aufweisen.

Das Gehäuse 1 ist mit einem Temperaturstabilisierungssystem 38 (Figur 1, 3) ausgerüstet. Dieses System schließt Heizelemente, Ventilatoren und mindestens einen Temperatursensor (in der Zeichnung nicht angegeben) ein. Dabei sind im Gehäuse 1 Lüftungsöffnungen (in der Zeichnung nicht angegeben) vorgesehen, welche den Luftwechsel, die Kühlung und die Lüftung sicherstellen. Das Bildschirmgerät kann mit dem im Gehäuse 1 angeordneten Energiespeicher 39, z. B. einer Batterie, und mit einer selbständigen, z. B. als Solarbatterien ausgeführten Stromversorgung 40 ausgerüstet sein.

### Ausführungsform II

Das Bildschirmgerät weist ein festes Gehäuse 101 auf (Fig. 8 und 9). Dieses Gehäuse 101 ist mit zwei gegenüberliegenden Platten 102 und 102' ausgeführt. Jede der Platten 202 und 202' ist mit Aufnahmestellen zum Einbau von Bildschirmen 203 und 203' versehen. Das Gehäuse 101 kann eine beliebige Geometrie aufweisen. In das Gehäuse 101 ist eine Steuereinheit 104 (Fig. 3) eingebaut. Die Steuereinheit 104 enthält einen Logikprozessor 105, einen Arbeitsspeicher 106 und einen Festspeicher 107. Die Steuereinheit 104 ist mit den Bildschirmen 103 und 103' verbunden.

Außerdem sind in dem Gehäuse 101 auch ein Adapter 108 und die mit der Steuereinheit 104 verbundenen drahtlosen Endgeräte 109 angeordnet. Der Adapter 108 ist zum Abspannen, Gleichrichten und Stabilisieren der in das Bildschirmgerät eingespeisten Spannung vorgesehen. Er ist mittels eines Kabels 110 mit einem Netzteil verbunden. Das Kabel 110 ist in einem Ständer (in der Zeichnung nicht angegeben) verlegt. Der Ständer dient zur Befestigung des Bildschirmgeräts. Im Gehäuse 101 sind am Chassis (in der Zeichnung nicht angegeben) der Steuereinheit 104 Aufnahmestellen zur Anordnung von Anschlüssen 111 bis 115 vorgesehen. Die Anschlüsse 111 bis 114 dienen zum Anschließen von externen Steuereinheiten. Der Anschluss 115 dient zum Anschließen von externen Peripheriegeräten, welche mit der Steuereinheit 104 verbunden sind. Dabei entsprechen die Form und die Abmessungen
- des Anschlusses 111 einem Mausanschluss,
- des Anschlusses 112 einem Tastaturanschluss,
- des Anschlusses 113 einem Anschluss für eine externe Speichereinheit,
- des Anschlusses 114 einem Anschluss für eine Datenein- und Datenausgabeeinrichtungen, z. B. Draht- oder Glasfaserleitung und
- des Anschlusses 115 einem Anschluss für Peripheriegeräte, z. B. einen Drucker.

Die externen Steuer- und Peripheriegeräte können in einer beliebigen Kombination einzeln oder komplett angeschlossen werden.

Auf den Platten 102 und 102' sind Aufnahmestellen angeordnet, an denen mindestens folgende Funktionsbaugruppen anbaubar sind:
- ein Kapazitätsgeber 116 zur Erkennung von beweglichen Subjekten und Objekten,
- eine Photozelle 117 (oder ein Optokoppler) zur Erkennung von beweglichen Subjekten und Objekten und
- eine Videokamera 118.

Auf den Seitenflächen des Gehäuses 101 sind Aufnahmestellen vorgesehen, wo mindestens folgende Funktionsbaugruppen eingebaut werden können:
- ein Lautsprecher 119,
- ein Infrarotanschluss 120 zum Empfang von Signalen, Befehlen und Bilderdateien zu ihrer Wiedergabe von dem Fernbedienungsteil aus,
- ein Mikrophon 121 und
- eine RFID-Einrichtung (Sensor/Scanner) 122 zum Fernablesen der RFID-Magnet-Tags (Etiketten) und Chips.

Innerhalb des Gehäuses 101 können am Chassis mindestens folgende Teile angebracht werden:
- ein Schwingungsgeber 123 zur Vorbeugung von Diebstahl- oder Sabotageversuchen (verändernde Eingriffe in das Produkt),
- ein Sensor 124 zur Kontrolle des Atmosphärendrucks,
- ein Sensor 125 zur Kontrolle der Außentemperatur,
- ein Sensor 126 zur Kontrolle der Umgebungsstrahlung,
- ein Sensor 127 zur Kontrolle der Rauchdichte der Umgebung,
- ein Sensor 128 zur biologischen Umgebungskontrolle und
- ein Sensor 129 zur chemischen Umgebungskontrolle.

Die Funktionsbaugruppen 116 bis 129 sind mit der Steuereinheit 104 verbunden.

Die Funktionsbaugruppen 116 bis 129 können in einer beliebigen Kombination eingebaut und angeschlossen werden, je nach den Gebrauchsbedingungen des Bildschirmgerätes und dessen Verwendungszweck. Die Funktionsbaugruppen 116 bis 118 können teilweise auf der Platte 102, teilweise auf der Platte 102' und einige davon auf beiden Platten 102 und 102' montiert werden. Die Anordnung der Funktionsbaugruppen 116 bis 118 wird vom Benutzer bestimmt.

Das Gehäuse 101 kann als ein rechteckiges Parallelepiped (Fig. 4 und 5 - Modell C) ausgeführt werden. Die Bildschirme 103 und 103' sowie die Funktionsbaugruppen 116 bis 118 werden an den senkrechten Platten 130 und 130' des Parallelepipeds mit dem größtem Flächeinhalt unter allen Platten des Parallelepipeds angeordnet.

Das Gehäuse 101 kann als ein vierflächiges Prisma (Fig. 6 und 7 - Modell D) ausgeführt werden. Seine Seitenflächen 131 und 131' weisen die Form eines gleichschenkligen Trapezes auf. Die Aufnahmestellen für den Einbau der Bildschirme 103 und 103' und der Funktionsbaugruppen 116 bis 118 sind an den schrägen Platten 132 und 132' angeordnet. Diese Platten 132 und 132' kreuzen sich hypothetisch außerhalb des Gehäuses 101 und sind hinsichtlich der imaginären senkrechten Platte unter gleichen Winkeln β und β' geneigt. Dabei geht die imaginäre senkrechte Ebene durch die imaginäre Schnittlinie der Platten des Gehäuses hindurch.

Das Gehäuse 101 (Fig. 8 und 9) ist mit einer durchsichtigen Schutzhülle 141 ausgerüstet. Dabei ist die durchsichtige Schutzhülle aus gegossenem Polycarbonat gefertigt, und ihre Form stimmt mit der Geometrie des Gehäuses 101 überein.

Das Bildschirmgerät kann drahtlose Endgeräte 109 (Fig. 3), eine WiFi-Karte 133 und/oder eine WiMax-Einrichtung 134 und/oder ein GPRS-Modem 135 und/oder einen TV-Tuner 136 und/oder eine Bluetooth-Einrichtung 137 aufweisen.

Im Bildschirmgerät können die Bildschirme 103 und 103' als LCD- oder Plasmabildschirme ausgeführt werden, welche eine flache oder eine konvex gewölbte Form aufweisen.

Das Gehäuse 101 ist mit einem Temperaturstabilisierungssystem 138 ausgerüstet. Dieses System umfasst Heizelemente, Ventilatoren und mindestens einen Temperatursensor (in der Zeichnung nicht angegeben). Dabei sind im Gehäuse 101 Lüftungsöffnungen (in der Zeichnung nicht angegeben) vorgesehen, welche dem Luftwechsel, die Kühlung und die Lüftung sicherstellen. Das Bildschirmgerät kann mit dem im Gehäuse 101 angeordneten Energiespeicher 139, z. B. einer Batterie, und mit der unabhängigen, z. B. als Solarbatterien ausgeführten Stromversorgung 140 ausgerüstet sein.

### Ausführungsform III

Das Bildschirmgerät weist ein erstes festes Gehäuse 201 und ein zweites festes Gehäuse 242 auf (Fig. 10 und 11). Das erste Gehäuse 201 ist mit zwei gegenüberliegenden Platten 202 und 202' ausgeführt. Jede der Platten 202 und 202' ist mit Aufnahmestellen zum Einbau von Bildschirmen 203 und 203' versehen. Das erste Gehäuse 201 kann eine beliebige Geometrie aufweisen. Innerhalb des zweiten Gehäuses 242 ist eine Steuereinheit 204 (Fig. 3) eingebaut. Die Steuereinheit 4 enthält einen Logikprozessor 205, einen Arbeitsspeicher 206 und einen Festspeicher 207. Außerdem sind innerhalb des Gehäuses 242 auch ein Adapter 208 und die mit Steuereinheit 104 verbundenen drahtlosen Endgeräte 209 angeordnet. Sie sind mit der Steuereinheit 204 verbunden. Der Adapter 208 ist zum Abspannen, Gleichrichten und Stabilisieren der in das Bildschirmgerät eingespeisten Spannung vorgesehen. Er ist mittels eines Kabels 210 mit einem Netzteil verbunden. Die Steuereinheit 204 ist mit den Bildschirmen 203 und 203' mittels eines Kabels 243 verbunden. Das Kabel 243 ist in einem Ständer (in der Zeichnung nicht angegeben) verlegt. Der Ständer dient zur Befestigung des ersten Gehäuses 201 des Bildschirmgeräts. Im zweiten Gehäuse 242 sind an dem Chassis (in der Zeichnung nicht angegeben) der Steuereinheit 204 die Aufnahmestellen zur Anordnung der Anschlüsse 211 bis 215 vorgesehen. Die Anschlüsse 211 bis 214 dienen zum Anschließen von externen Steuereinheiten. Der Anschluss 215 dient zum Anschließen von externen Peripheriegeräten, welche mit der Steuereinheit 204 verbunden sind. Dabei entsprechen die Form und die Abmessungen
- des Anschlusses 211 einem Mausanschluss,
- des Anschlusses 212 einem Tastaturanschluss,
- des Anschlusses 213 einem Anschluss für die externe Speichereinheit,
- des Anschlusses 214 einem Anschluss für die Datenein- und Datenausgabeeinrichtungen, z. B. Draht- oder Glasfaserleitung und
- des Anschlusses 215 einem Anschluss für die Peripheriegeräten, z. B. einen Drucker.

Die externen Steuer- und Peripheriegeräte können in einer beliebigen Kombination einzeln oder komplett angeschlossen werden.

Auf den Platten 202 und 202' sind Aufnahmestellen angeordnet, wo mindestens folgende Funktionsbaugruppen anbaubar sind:
- ein Kapazitätsgeber 216 zur Vorbeugung von beweglichen Subjekten und Objekten,
- eine Photozelle 217 (oder ein Optokoppler) zur Überwachung von beweglichen Subjekten und Objekten und
- eine Videokamera 218.

Auf den Seitenflächen des Gehäuses 201 sind Aufnahmestellen angeordnet, an denen mindestens folgende Funktionsbaugruppen anbaubar sind:
- ein Lautsprecher 219,
- ein Infrarotanschluss 220 zum Empfang von Signalen, Befehlen und Bilderdateien zu ihrer Wiedergabe von dem Fernbedienungsteil aus,
- ein Mikrophon 221 und
- eine RFID-Einrichtung (Sensor/Scanner) 222 zum Fernablesen der RFID-Magnet-Tags (Etiketten) und Chips.

Die Funktionseinheiten 216 bis 222 sind mit der Steuereinheit 204 mittels eines Kabels 243 verbunden.

Innerhalb des zweiten Gehäuses 242 können am Chassis der Steuereinheit 204 mindestens folgende Teile anbringbar sein:
- ein Schwingungsgeber 223 zur Vorbeugung von Diebstahl- oder Sabotageversuchen (Verändernde Eingriffe in das Produkt),
- ein Sensor 224 zur Kontrolle des Atmosphärendrucks,
- ein Sensor 225 zur Kontrolle der Außentemperatur,
- ein Sensor 226 zur Kontrolle der Umgebungsstrahlung,
- ein Sensor 227 zur Kontrolle der Rauchdichte der Umgebung,
- ein Sensor 228 zur biologischen Umgebungskontrolle und
- ein Sensor 229 zur chemischen Umgebungskontrolle.

Die Funktionsbaugruppen 216 bis 229 können in einer beliebigen Kombination eingebaut und angeschlossen werden, je nach den Gebrauchsbedingungen des Bildschirmgerätes und dessen Verwendungszweck.

Die Funktionsbaugruppen 216 bis 218 können teilweise auf der Platte 202, teilweise auf der Platte 202' und einige davon auf den beiden Platten 202 und 202' montiert werden. Die Anordnung der Funktionsbaugruppen 216 bis 218 wird vom Benutzer bestimmt.

Das erste Gehäuse 201 kann als ein rechteckiges Parallelepiped (Fig. 12 und 13 - Modell E) ausgeführt werden. Die Bildschirme 203 und 203' sowie die Funktionsbaugruppen 216 bis 218 werden an den senkrechten Platten 230 und 230' des Parallelepipeds mit dem größtem Flächeinhalt unter allen Platten des Parallelepipeds angeordnet.

Das erste Gehäuse 201 kann als ein vierflächiges Prisma (Fig. 14 und 15 - Modell F) ausgebildet sein. Seine Seitenflächen 231 und 231' weisen die Form eines gleichschenkligen Trapezes auf. Die Aufnahmestellen für den Einbau der Bildschirme 203 und 203' und der Funktionsbaugruppen 216 bis 218 sind an den schrägen Platten 232 und 232' angeordnet. Diese Platten kreuzen sich hypothetisch außerhalb des Gehäuses 201 und sind hinsichtlich der imaginären senkrechten Platte unter gleichen Winkeln β und β' geneigt. Dabei geht die imaginäre senkrechte Ebene durch die imaginäre Schnittlinie der Platten des Gehäuses hindurch.

Im Bildschirmgerät können die drahtlose Endgeräte 209 (Fig. 3) eine WiFi-Karte 233 und/oder eine WiMax-Einrichtung 234 und/oder ein GPRS-Modem 235 und/oder ein TV-Tuner 236 und/oder eine Bluetooth-Einrichtung 237 aufweisen.

Im Bildschirmgerät können die Bildschirme 203 und 203' als LCD- oder Plasmabildschirme ausgebildet sein, welche eine flache oder eine konvex gewölbte Form aufweisen.

Das zweite Gehäuse 242 (Fig. 10) ist mit einem Temperaturstabilisierungssystem 238 ausgerüstet. Dieses System umfasst Heizelemente, Ventilatoren und mindestens einen Temperatursensor (in der Zeichnung nicht angegeben). Dabei sind in den Gehäusen 201 und 242 Lüftungsöffnungen (in der Zeichnung nicht angegeben) vorgesehen, welche den Luftwechsel, die Kühlung und die Lüftung sicherstellen.

Das Bildschirmgerät kann mit einem im zweiten Gehäuse 242 angeordneten Energiespeicher 239 (Fig. 3), z. B. einer Batterie, und mit einer unabhängigen, z. B. als Solarbatterien ausgeführten, Stromversorgung 240 ausgerüstet sein. In diesem Fall werden die Solarbatterien am ersten Gehäuse 201 angebracht und mit dem Energiespeicher 239 mittels des Kabels 243 verbunden.

### Ausführungsform IV

Das Bildschirmgerät weist ein erstes festes Gehäuse 301 und ein zweites festes Gehäuse 342 (Figuren 16 und 17) auf. Das erste Gehäuse 301 ist mit zwei gegenüberliegenden Platten 302 und 302' ausgeführt. Jede der Platten 302 und 302' ist mit Aufnahmestellen zum Einbau der Bildschirme 303 und 303' versehen. Das erste Gehäuse 301 kann eine beliebige Geometrie aufweisen. In das zweite Gehäuse 342 ist eine Steuereinheit 304 (Fig. 3) eingebaut. Die Steuereinheit 304 enthält einen Logikprozessor 305, einen Arbeitsspeicher 306 und einen Festspeicher 307. Außerdem sind innerhalb des Gehäuses 342 auch ein Adapter 308 und die mit der Steuereinheit 304 verbundenen drahtlosen Endgeräte 309 angeordnet. Der Adapter 308 ist zum Abspannen, Gleichrichten und Stabilisieren der in das Bildschirmgerät eingespeisten Spannung vorgesehen. Er ist mittels eines Kabels 310 mit einem Netzteil verbunden. Die Steuereinheit 304 ist mit den Bildschirmen 303 und 303' mittels eines Kabels 343 verbunden. Das Kabel 343 ist in einem Ständer (in der Zeichnung nicht angegeben) verlegt. Der Ständer dient zur Befestigung des ersten Gehäuses 301. Im zweiten Gehäuse 342 sind am Chassis (in der Zeichnung nicht angegeben) der Steuereinheit 304 Aufnahmestellen zur Anordnung der Anschlüsse 311 bis 315 vorgesehen. Die Anschlüsse 311 bis 314 dienen zum Anschließen von externen Steuereinheiten. Der Anschluss 315 dient zum Anschließen von externen Peripheriegeräten, welche mit der Steuereinheit 304 verbunden sind. Dabei entsprechen die Form und die Abmessungen
- des Anschlusses 311 einem Mausanschluss,
- des Anschlusses 312 einem Tastaturanschluss,
- des Anschlusses 313 einem Anschluss für die externe Speichereinheit,
- des Anschlusses 314 einem Anschluss für die Datenein- und Datenausgabeeinrichtungen, z. B. Draht- oder Glasfaserleitung und
- des Anschlusses 315 einem Anschluss für Peripheriegeräte, z. B. einen Drucker.

Die externen Steuer- und Peripheriegeräte können in einer beliebigen Kombination einzeln oder komplett angeschlossen werden.

Auf den Platten 302 und 302' des ersten Gehäuses 301 sind Aufnahmestellen angeordnet, an die mindestens folgende Funktionsbaugruppen eingebaut werden können:
- ein Kapazitätsgeber 316 zur Überwachung von beweglichen Subjekten und Objekten,
- eine Photozelle 317 (oder ein Optokoppler) zur Überwachung von beweglichen Subjekten und Objekten und
- eine Videokamera 318.

Auf den Seitenflächen des ersten Gehäuses 301 sind Aufnahmestellen angeordnet, an denen mindestens folgende Funktionsbaugruppen anbaubar sind:
- ein Lautsprecher 319,
- ein Infrarotanschluss 320 zum Empfang von Signalen, Befehlen und Bilderdateien zu ihrer Wiedergabe von dem Fernbedienungsteil aus,
- ein Mikrophon 321 und
- eine RFID-Einrichtung (Sensor/Scanner) 322 zum Fernablesen der RFID-Magnet-Tags (Etiketten) und Chips.

Die Funktionsbaugruppen 316 bis 322 sind mit der Steuereinheit 304 mittels eines Kabels 343 verbunden. Innerhalb des zweiten Gehäuses 342 sind am Chassis der Steuereinheit 304 mindestens folgende Teile anbringbar:
- ein Schwingungsgeber 323 zur Vorbeugung von Diebstahl- oder Sabotageversuchen (Verändernde Eingriffe in das Produkt),
- ein Sensor 324 zur Kontrolle des Atmosphärendrucks,
- ein Sensor 325 zur Kontrolle der Außentemperatur,
- ein Sensor 326 zur Kontrolle der Umgebungsstrahlung,
- ein Sensor 227 zur Kontrolle der Rauchdichte der Umgebung,
- ein Sensor 328 zur biologischen Umgebungskontrolle und
- ein Sensor 329 zur chemischen Umgebungskontrolle.

Die Funktionsbaugruppen 316 bis 329 können in einer beliebigen Kombination eingebaut und angeschlossen werden, je nach den Gebrauchsbedingungen des Bildschirmgerätes und dessen Verwendungszweck.

Die Funktionsbaugruppen 316 bis 318 können teilweise auf der Platte 302, teilweise auf der Platte 302' und einige davon auf den beiden Platten 302 und 302' montiert werden. Die Anordnung der Funktionsbaugruppen 316 bis 318 wird vom Benutzer bestimmt.

Das erste Gehäuse 301 kann in Form von einem rechteckigen Parallelepiped (Fig. 12 und 13 - Modell G) ausgeführt werden. Auf seinen senkrechten Platten 330 und 330', welche den größten Flächeinhalt unter allen Platten des Parallelepipeds aufweisen, sind die Bildschirme 303 und 303' und die Funktionsbaugruppen 316 bis 318 montiert.

Das erste Gehäuse 301 kann als ein vierflächiges Prisma (Fig. 14 und 15 - Modell H) ausgebildet werden, dessen Seitenflächen 331 und 331' die Form eines gleichschenkligen Trapezes aufweisen. Die Aufnahmestellen für den Einbau der Bildschirme 303 und 303' und der Funktionsbaugruppen 216 bis 218 sind an den schrägen Platten 332 und 332' angeordnet. Diese Platten 332 und 332' kreuzen sich hypothetisch außerhalb des ersten Gehäuses 301 und sind hinsichtlich der imaginären senkrechten Platte unter gleichen Winkeln β und β' geneigt. Dabei geht die imaginäre senkrechte Ebene durch die imaginäre Schnittlinie der Platten des Gehäuses hindurch.

Das Gehäuse 301 (Fig. 16 und 17) ist mit einer durchsichtigen Schutzhülle 341 versehen. Dabei ist die durchsichtige Schutzhülle aus gegossenem Polycarbonat gefertigt, und ihre Form stimmt mit der Geometrie des Gehäuses 301 überein.

Die drahtlosen Endgeräte 309 (Fig. 3) können eine WiFi-Karte 333 und/oder eine WiMax-Einrichtung 334 und/oder ein GPRS-Modem 335 und/oder einen TV-Tuner 336 und/oder eine Bluetooth-Einrichtung 337 aufweisen. Die Bildschirme 303 und 303' können als LCD- oder Plasmabildschirme ausgeführt sein, welche eine flache oder eine konvex gewölbte Form aufweisen. Das zweite Gehäuse 342 ist mit einem Temperaturstabilisierungssystem 338 ausgerüstet, welches Heizelemente, Ventilatoren und mindestens einen Temperatursensor (in der Zeichnung nicht angegeben) aufweist. Dabei sind in den Gehäusen 301 und 342 Lüftungsöffnungen (in der Zeichnung nicht angegeben) vorgesehen, welche den Luftwechsel, die Kühlung und die Lüftung sicherstellen.

Das Bildschirmgerät kann mit einem im zweiten Gehäuse 342 angeordneten Energiespeicher 339 (Fig. 3) z. B. einer Batterie, und mit einer unabhängigen Stromversorgung 340 ausgerüstet sein. Die unabhängige Stromversorgung 340 kann als Solarbatterien ausgebildet sein. In diesem Fall werden die Solarbatterien am ersten Gehäuse 301 angebracht und mit dem Energiespeicher 339 mittels eines Kabels 343 gekoppelt.

### Bildschirmgeräte nach den Ausführungsformen I, II, III und IV funktionieren in folgender Welse:

Das Bildschirmgerät wird am Eingang mit Strom versorgt.

Das eingehende Signal wird von den drahtlosen Endgeräten 9 (109, 209, 309) empfangen. Diese drahtlosen Endgeräte 9 (109, 209, 309) umfassen eine WiFi-Karte 33 (133, 233, 333) und/oder eine WiMax-Einrichtung 34 (134, 234, 334) und/oder ein GPRS-Modem 35 (135, 235, 335) und/oder einen TV-Tuner 36 (136, 236, 336) und/oder eine Bluetooth-Einrichtung 37 (137, 237, 337). Dieses Signal wird von dem Logikprozessor 5 (105, 205, 305) bearbeitet und im Arbeitsspeicher 6 (106, 206, 306) und im Festspeicher 7 (107, 207, 307) abgespeichert.

Das eingehende Signal kann von jedem der oben genannten drahtlosen Endgeräte 9 (19, 29, 39) empfangen werden. Es kann auch über die an die entsprechenden Anschlüsse angeschlossenen externen Steuergeräte eingehen. Diese Anschlüsse umfassen:
- 11 (111, 211, 311)-den Mausanschluss,
- 12 (112, 212, 312) - den Tastaturanschluss,
- 13 (113, 213, 313) - den Anschluss für die externe Speichereinheit und
- 14 (114, 214, 314) - den Anschluss für die Datenein- und Datenausgabeeinrichtungen, z. B. Draht- oder Glasfaserleitung,
das eingehende Signal kann auch durch
- das Fernbedienungsteil an beliebigem Weltpunkt bei der Wechselwirkung zwischen der Steuereinheit 4 (104, 204, 304) und dem eingebauten Infrarotanschluss 20 (120, 220, 320),
- und die angeschlossenen Sensoren, wie die Kapazitätsgeber 16 (116, 216, 316), die Photozelle (oder Optokoppler) 17 (117, 217, 317) zur Überwachung von beweglichen Subjekten und Objekten, der Videokamera 18 (118, 218, 318), dem Schwingungsgeber 23 (123, 223, 323), welcher Diebstahl- oder Sabotageversuche (verändernde Eingriffe in das Produkt) erkennt und die RFID-Einrichtung (Sensor/Scanner) 22 (122, 222, 322), zum Fernablesen der RFID-Magnet-Tags (Etiketten) und Chips empfangen werden.

Das eingehende Signal kann auch auf folgende Weise empfangen werden:
- vom Sensor 24 (124, 224, 324) zur Kontrolle des Atmosphärendrucks,
- vom Sensor 25 (125, 225, 325) zur Kontrolle der Außentemperatur,
- vom Sensor 26 (126, 216, 326) zur Kontrolle der Umgebungsstrahlung,
- vom Sensor 27 (127, 227, 327) zur Kontrolle der Rauchdichte der Umgebung,
- vom Sensor 28 (128, 228, 328) zur biologischen Umgebungskontrolle und
- vom Sensor 29 (129, 229, 329) zur chemischen Umgebungskontrolle.

Das Eingangssignal kann auch von einem ähnlichen Nachbargerät oder von einer Bedienungsperson, welche sich in unmittelbarer Nähe des Bildschirmgerätes befindet, eingehen.

Bei Signalempfang oder -übertragung auf/von Nachbargeräte(n) werden drahtlose Endgeräte 9 (109, 209, 309) von dem Logikprozessor 5 (105, 205, 305) der Steuereinheit 4 (104, 204, 304) nach
- Signalempfang und -stärke von den übertragenden Geräten und nach einem
- Signal von den ähnlichen Geräten in der Nähe
abgefragt.

Der Logikprozessor 5 (105, 205, 305) sendet das Signal über seinen Betriebszustand und die aufgefundenen ähnlichen Geräte an einen entfernten Rechner (an die Steuerzentrale) oder an die in der Nähe aufgefundenen ähnlichen Geräte.

Bei der Wiedergabe der audiovisuellen Information werden die Reihenfolge und die Dauer der Vorführungen von dem im Festspeicher 7 (107, 207, 307) aufbewahrten Steuerprogramm geregelt. Das Aktualisieren der Wiedergabeliste wird über die beliebigen existierenden (vorliegenden) Kommunikationskanäle der Zentrale ausgeführt.

Die Fernsteuerung der Bildschirmgeräte kann entweder von einem beliebigen entfernten Rechner mit Internetanschluss oder von einem entfernten Rechner, welcher sich in der Empfangszone der WiFi-Karte, der WiMax- oder Bluetooth-Einrichtung oder den Infrarotanschlusses befindet, erfolgen. Die Fernsteuerung der Bildschirmgeräte kann auch über die angeschlossene Tastatur, Maus, externe Speichereinheit oder des angeschlossenen Eingabe- und Ausgabegerät erfolgen.

Das Feedback der Eingangssignalquellen erfolgt auf folgende Weise:

Das Signal von einer beliebigen der Funktionsbaugruppen 16 bis 29 (116 bis 129, 216 bis 229, 316 bis 329) wird im Festspeicher 7 (107, 207, 307) gespeichert.

Die Daten über die Auslösung einer der Funktionsbaugruppen werden über die Kommunikationskanäle an die Zentrale (an die entfernte Bedienungsperson) und/oder an die Nachbargeräte übertragen.

Bei der Marketingforschung liest die RFID-Einrichtung die in der Empfangszone aufgefundenen Magnet-Tags (Etiketten) und Chips ab, welche in Personalausweise, Waren, Drahtlosteile eingebaut sind. Die notwendigen Daten werden im Festspeicher 7 (107, 207, 307) gespeichert.

Die Datenein-/ Datenausgabe und der Anschluss der externen Geräte kann von der Bedienungsperson ausgeführt werden, indem sie beliebige Geräte und Vorrichtungen, u.a. die von der Bedienungsperson gesteuerten Datenein-/Datenausgabegeräte, an die Anschlüsse 11 bis 15(111 bis 115, 211 bis 215, 311 bis 315) des Bildschirmgerätes anschließt.

Das Bildschirmgerät ermöglicht es, mittels drahtloser Kommunikation, z. B. einer Wi-Fi-Karte, mit den Drahtlosteilen (PDA) der Benutzer (Verbraucher) laut dem programmierten Algorithmus zu kommunizieren. Dadurch kann der Benutzer (Verbraucher) die Information von dem Bildschirmgerät auf seinem Drahtlostelefon empfangen und mit dem Bildschirmgerät interagieren.

Selbsttest, Selbstdiagnose und Neustart des Bildschirmgerätes bei einer Blockierung des Logikprozessors wird durch die Überwachungsschaltung (einem Watchdog-Gerät) automatisch ausgeführt. Die Daten über die Blockierung und den Neustart des Bildschirmgerätes werden im Festspeicher 7 (107, 207, 307) gespeichert und an die Zentrale übertragen, wenn eine Internetverbindung besteht.

Das Bildschirmgerät wird entweder nach dem von der Zentrale mittels eines der Kommunikationskanäle übertragenen Abschaltbefehl 6 oder unmittelbar durch das Trennen vom Stromnetz abgeschaltet.

Die Erfindungen werden durch die Gesamtheit der wesentlichen Merkmale in den Ansprüchen charakterisiert.

## Patentansprüche

1. Bildschirmgerät, welches ein festes Gehäuse (1) aufweist, in das ein Bildschirm (3), eine Steuereinheit (4) mit einem Logikprozessor (5), ein Arbeitsspeicher (6), ein Festspeicher (7), ein mit dem Bildschirm (3) verbundener Adapter (8), Funktionsbaugruppen (16 bis 29) und die mit der Steuereinheit (4) verbundenen drahtlosen Endgeräte (9) eingebaut sind, wobei die Funktionsbaugruppen (16 bis 29) mindestens ein Mikrophon (21), einen Lautsprecher (19), eine Videokamera (18), einen Infrarotanschluss (20) zum Empfang von Signalen, Befehlen und Bilderdateien zu ihrer Wiedergabe von einem Fernbedienungsteil aus aufweisen,
**dadurch gekennzeichnet,**
**dass** es mit einem zweiten Bildschirm (31) und mit Anschlüssen (11 bis 15) versehen ist, die zum Anschließen von externen Steuer- und Peripherieeinrichtungen dienen,
**dass** die Steuer- und Peripherieeinrichtungen mit der Steuereinheit (4) verbunden und am gleichen Gehäuse (1) angebracht sind, und
**dass** der Adapter (8) innerhalb des Gehäuses (1) angeordnet ist, wobei das Gehäuse (1) mit zwei gegenüberliegenden Platten (2, 2') ausgebildet ist und auf jeder Platte (2, 2') Aufnahmestellen zum Einbau von mindestens einem Bildschirm (3, 3') und der Funktionsbaugruppen (16 bis 29) vorgesehen sind.

2. Bildschirmgerät nach Anspruch 1,
**dadurch gekennzeichnet,**
**dass** das Gehäuse (1) als ein rechteckiges Parallelepiped ausgeführt ist und
**dass** die Aufnahmestellen zum Einbau der Bildschirme (3, 3') und der Funktionsbaugruppen (16 bis 18) auf den senkrechten Platten mit dem größtem Flächeinhalt angeordnet sind.

3. Bildschirmgerät nach Anspruch 1,
**dadurch gekennzeichnet,**
**dass** das Gehäuse (1) als ein vierflächiges Prisma ausgeführt ist, dessen Seitenflächen (31,31') die Form eines gleichschenkligen Trapezes aufweisen,
**dass** die Aufnahmestellen zum Einbau der Bildschirme (3, 3') und der Funktionsbaugruppen (16 bis 18) auf den schrägen Platten (32, 32') angeordnet sind, die sich hypothetisch außerhalb des Gehäuses (1) kreuzen und
**dass** ihre Neigungswinkel (β, β') in Bezug auf die hypothetische senkrechte Ebene, die durch die imaginäre Schnittlinie der Platten (32, 32') verläuft, gleich sind.

4. Bildschirmgerät nach Anspruch 1,
**dadurch gekennzeichnet,**
**dass** das Gehäuse (1) eine beliebige Geometrie aufweist.

5. Bildschirmgerät nach Anspruch 1,
**dadurch gekennzeichnet,**
**dass** die drahtlosen Endgeräte (9) mit einer WiFi-Karte (33) und/oder mit einer WiMax-Einrichtung (34) und/oder mit einem GPRS-Modem (35) und/oder mit einem Fernseh-Tuner (36) und/oder mit einer Bluetooth-Einrichtung (37) ausgerüstet sind.

6. Bildschirmgerät nach Anspruch 1,
**dadurch gekennzeichnet,**
**dass** die Bildschirme (3, 3') als LCD bzw. Plasmabildschirme mit flacher oder konvex gewölbter Form ausgebildet sind.

7. Bildschirmgerät nach Anspruch 1,
**dadurch gekennzeichnet,**
**dass** als Funktionsbaugruppen (16 bis 29) mindestens folgende Baugruppen in das Gehäuse (1) eingebaut sind:
Ein Kapazitätsgeber (16) zur Überwachung der beweglichen Subjekte bzw. Objekte; und/oder mindestens eine Photozelle (17) bzw. ein Optokoppler zur Überwachung der beweglichen Subjekte bzw. Objekte und/oder mindestens ein Schwingungsgeber (23) zur Vorbeugung von eventuellen Diebstahl- oder Sabotageversuchen (verändernde Eingriffe in das Produkt); und/oder Geber (24 bis 27) zur Kontrolle von Atmosphärendruck, Temperatur, Umgebungsstrahlung, Rauchdichte der Umgebung und/oder mindestens ein Geber (28) zur biologischen Umgebungskontrolle und/oder mindestens ein Geber (29) zur chemischen Umgebungskontrolle und/oder mindestens eine RFID-Einrichtung (22) (Sensor/Scanner) zum Fernablesen der Magnet-Etiketten und Chips.

8. Bildschirmgerät nach Anspruch 1,
**dadurch gekennzeichnet,**
**dass** die Form und die Abmessungen der Anschlüsse(11 bis 15) das Anschließen von einer Maus und/oder einer Tastatur und/oder einer externen Speichereinheit und/oder einer Datenein- und Ausgabeeinheit und/oder sonstiger Steuer- oder Peripherieeinrichtungen sicherstellen.

9. Bildschirmgerät nach Anspruch 1,
**dadurch gekennzeichnet,**
**dass** es mit einem Energiespeicher (39) und einer unabhängigen Stromversorgung in Form von Solarbatterien versehen ist.

10. Bildschirmgerät, welches ein festes Gehäuse (101) aufweist, in das ein Bildschirm (103), eine Steuereinheit (104) mit einem Logikprozessor (105), ein Arbeitsspeicher (106), ein Festspeicher (107), ein mit dem Bildschirm (103) verbundener Adapter (106), Funktionsbaugruppen(116 bis 129) und die mit der Steuereinheit (104) verbundenen drahtlosen Endgeräte (109) eingebaut sind, wobei die Funktionsbaugruppen (116 bis 129) mindestens ein Mikrophon (121), einen Lautsprecher (119), eine Videokamera (118), einen Infrarotanschluss (120) zum Empfang von Signalen, Befehlen und Bilderdateien zu ihrer Wiedergabe von einem Fernbedienungsteil aus aufweisen,
**dadurch gekennzeichnet,**
**dass** es mit einem zweiten Bildschirm (103) und Anschlüssen (111 bis 115) versehen ist, die zum Anschließen von externen Steuer- und Peripherieeinrichtungen dienen;
**dass** die Steuer- und Peripherieeinrichtungen mit der Steuereinheit (104) verbunden und am gleichen Gehäuse (101) angebracht sind,
**dass** der Adapter (106) innerhalb des Gehäuses (101) angeordnet ist,
**dass** das Gehäuse (101) mit zwei gegenüberliegenden Platten (102, 102') ausgebildet ist und auf jeder Platte (102, 102') Aufnahmestellen zum Einbau von mindestens einem Bildschirm (103, 103') und Funktionsbaugruppen (116 bis 118) vorgesehen sind und
**dass** das Gehäuse (101) mit einer durchsichtigen Schutzumhüllung (141) versehen ist, welche mit der Geometrie des ersten Gehäuses (101) identisch ist.

11. Bildschirmgerät nach Anspruch 10,
**dadurch gekennzeichnet,**
**dass** das Gehäuse (101) als ein rechteckiges Parallelepiped ausgebildet ist und
**dass** die Aufnahmestellen zum Einbau der Bildschirme (103, 103') und der Funktionsbaugruppen (116 bis 129) auf den senkrechten Platten (102, 102') mit dem größtem Flächeinhalt angeordnet sind.

12. Bildschirmgerät nach Anspruch 10,
**dadurch gekennzeichnet,**
**dass** das Gehäuse (101) als ein vierflächiges Prisma ausgeführt ist, dessen Seitenflächen die Form eines gleichschenkligen Trapezes aufweisen,
**dass** die Aufnahmestellen zum Einbau der Bildschirme (103, 103') und der Funktionsbaugruppen (116 bis 129) auf schrägen Platten (102, 102') angeordnet sind, die sich hypothetisch außerhalb des Gehäuses (101) kreuzen und
**dass** ihre Neigungswinkel (β, β') in Bezug auf die hypothetische senkrechte Ebene, die durch die imaginäre Schnittlinie der Platten (102, 102') verläuft, gleich sind.

13. Bildschirmgerät nach Anspruch 10,
**dadurch gekennzeichnet,**
**dass** das Gehäuse (101) eine beliebige Geometrie aufweist.

14. Bildschirmgerät nach Anspruch 10,
**dadurch gekennzeichnet,**
**dass** die drahtlosen Endgeräte (109) mit einer WiFi-Karte (135) und/oder mit einer WiMax-Einrichtung (134) und/oder mit einem GPRS-Modem (135) und/oder mit einem Fernseh-Tuner (136) und/oder mit einer Bluetooth-Einrichtung (137) ausgerüstet sind.

15. Bildschirmgerät nach Anspruch 10,
**dadurch gekennzeichnet,**
**dass** die Bildschirme (103, 103') als LCD bzw. Plasmabildschirme mit flacher oder konvex gewölbter Form ausgebildet sind.

16. Bildschirmgerät nach Anspruch 10,
**dadurch gekennzeichnet,**
**dass** in das Gehäuse (101) als Funktionsbaugruppen (116 bis 129) mindestens folgende Baugruppen einbaubar sind, ein Kapazitätsgeber (116) zur Überwachung der beweglichen Subjekte bzw. Objekte und/oder mindestens eine Photozelle (117) bzw. ein Optokoppler zur Überwachung der beweglichen Subjekte bzw. Objekte und/oder mindestens ein Schwingungsgeber (123) zur Vorbeugung von eventuellen Diebstahl- oder Sabotageversuchen (verändernde Eingriffe in das Produkt) und/oder Geber (124 bis 127) zur Kontrolle von Atmosphärendruck, Temperatur, Umgebungsstrahlung, Rauchdichte der Umgebung; und/oder mindestens ein Geber (128) zur biologischen Umgebungskontrolle; und/oder mindestens ein Geber (129) zur chemischen Umgebungskontrolle und/oder mindestens eine RFID-Einrichtung (122) (Sensor/Scanner) zum Fernablesen der Magnet-Etiketten und Chips.

17. Bildschirmgerät nach Anspruch 10,
**dadurch gekennzeichnet,**
**dass** die Form und die Abmessungen der Anschlüsse (111 bis 115) das Anschließen von einer Maus und/oder einer Tastatur und/oder einer externen Speichereinheit und/oder einer Datenein- und Ausgabeeinheit und/oder sonstiger Steuer- oder Peripherieeinrichtungen sicherstellen.

18. Bildschirmgerät nach Anspruch 10,
**dadurch gekennzeichnet,**
**dass** es mit einem Energiespeicher (139) und einer unabhängigen Stromversorgung in Form von Solarbatterien versehen ist.

19. Bildschirmgerät, welches ein festes Gehäuse (201) aufweist, in das ein Bildschirm (203), eine Steuereinheit (204) mit einem Logikprozessor (205), ein Arbeitsspeicher (206), ein Festspeicher (207), ein mit dem Bildschirm (203) verbundener Adapter (208), Funktionsbaugruppen (216 bis 229) und die mit
der Steuereinheit (204) verbundenen drahtlosen Endgeräte (209) eingebaut sind, wobei die Funktionsbaugruppen (216 bis 229) mindestens ein Mikrophon (221), einen Lautsprecher (219), eine Videokamera (218), einen infrarotanschluss (220) zum Empfang von Signalen, Befehlen und Bilderdateien zu ihrer Wiedergabe von einem Fernbedienungsteil aus aufweisen,
**dadurch gekennzeichnet,**
**dass** es mit einem zweiten Bildschirm (203') und Anschlüssen (211 bis 215) zum Anschließen von externen Steuer- und Peripherieeinrichtungen versehen ist,
**dass** es mit einem zweiten Gehäusen (242) versehen ist,
**dass** die Bildschirme (203, 203') und einige der Funktionsbaugruppen (216 bis 229) im ersten Gehäuse (201) angeordnet sind, während die Steuereinheit (204), der Adapter (208) und die drahtlosen Endgeräte (209) in das zweite Gehäuse (242) eingebaut und mit Funktionsbaugruppen (219 bis 229) aus dem ersten Gehäuse (201) mittels eines Kabels (210) verbunden sind,
**dass** die übrigen der Funktionsbaugruppen (219 bis 229) und die Anschlüsse (211 bis 215) innerhalb des zweiten Gehäuses (242) angeordnet sind,
**dass** das erste Gehäuse (201) mit zwei gegenüberliegenden Platten (202, 202') ausgebildet ist und
**dass** auf jeder Platte (202, 202') Aufnahmestellen zum Einbau von mindestens einem Bildschirm (203, 203') und einigen der Funktionsbaugruppen (216 bis 218) vorgesehen sind.

20. Bildschirmgerät nach Anspruch 19,
**dadurch gekennzeichnet,**
**dass** das erste Gehäuse (201) als ein rechteckiges Parallelepiped ausgebildet ist und
**dass** die Aufnahmestellen zum Einbau von Bildschirmen (203, 203') und Funktionsbaugruppen (216 bis 218) auf den senkrechten Platten (282, 282') mit den größten Flächeinhalt angeordnet sind.

21. Bildschirmgerät nach Anspruch 19,
**dadurch gekennzeichnet,**
**dass** das erste Gehäuse (201) als ein vierflächiges Prisma ausgeführt ist, dessen Seitenflächen (231, 231') die Form eines gleichschenkligen Trapezes aufweisen,
**dass** die Aufnahmestellen zum Einbau von Bildschirmen (203, 203') und Funktionsbaugruppen (216 bis 218) auf den schrägen Platten (202, 202') angeordnet sind, die sich hypothetisch außerhalb des Gehäuses (201) kreuzen und
**dass** dabei ihre Neigungswinkel (β, β') in Bezug auf die hypothetische senkrechte Ebene, die durch die imaginäre Schnittlinie der Platten (282, 282') verläuft, gleich sind.

22. Bildschirmgerät nach Anspruch 19,
**dadurch gekennzeichnet,**
**dass** das Gehäuse (201) eine beliebige Geometrie aufweist.

23. Bildschirmgerät nach Anspruch 19,
**dadurch gekennzeichnet,**
**dass** die drahtlosen Endgeräte (209) mit einer WiFi-Karte (233) und/oder mit einer WiMax-Einrichtung (234) und/oder mit einem GPRS-Modem (235) und/oder mit einem Fernseh-Tuner (236) und/oder mit einer Bluetooth-Einrichtung (237) ausgerüstet sind.

24. Bildschirmgerät nach Anspruch 19,
**dadurch gekennzeichnet,**
**dass** die Bildschirme (203, 203') als LCD bzw. Plasmabildschirme mit flacher oder konvex gewölbter Form ausgebildet sind.

25. Bildschirmgerät nach Anspruch 19,
**dadurch gekennzeichnet,**
**dass** als Funktionsbaugruppen (216 bis 229) mindestens folgende Baugruppen einbaubar sind:
ein Kapazitätsgeber (216) zur Überwachung der beweglichen Subjekte bzw. Objekte, und/oder mindestens eine Photozelle (217) bzw. ein Optokoppler zur Überwachung der beweglichen Subjekte bzw. Objekte, und/oder mindestens ein Schwingungsgeber (223) zur Vorbeugung von eventuellen Diebstahl- oder Sabotageversuchen (verändernde Eingriffe in das Produkt), und/oder Geber (224 bis 227) zur Kontrolle von Atmosphärendruck, Temperatur, Umgebungsstrahlung, Rauchdichte der Umgebung, und/oder mindestens ein Geber (228) zur biologischen Umgebungskontrolle, und/oder mindestens ein Geber (229) zur chemischen Umgebungskontrolle, und/oder mindestens eine RFID-Einrichtung (222) (Sensor/Scanner) zum Fernablesen der Magnet-Etiketten und Chips.

26. Bildschirmgerät nach Anspruch 19,
**dadurch gekennzeichnet,**
**dass** die Form und die Abmessungen der Anschlüsse (211 bis 215) das Anschließen von einer Maus und/oder einer Tastatur und/oder einer externen Speichereinheit und/oder einer Datenein- und Ausgabeeinheit und/oder sonstiger Steuer- oder Peripherieeinrichtungen sicherstellen.

27. Bildschirmgerät nach Anspruch 19,
**dadurch gekennzeichnet,**
**dass** es mit einem Energiespeicher (239) und einer unabhängigen Stromversorgung in Form von Solarbatterien versehen ist.

28. Bildschirmgerät, welches ein festes Gehäuse (301) aufweist, in das ein Bildschirm (303), eine Steuereinheit (304) mit einem Logikprozessor (305), ein Arbeitsspeicher (306), ein Festspeicher (307), ein mit dem Bildschirm (303) verbundener Adapter (308), Funktionsbaugruppen (316 bis 329) und die mit der Steuereinheit (304) verbundenen drahtlosen Endgeräte (309) eingebaut sind, wobei die Funktionsbaugruppen (316 bis 329) mindestens ein Mikrophon (321), einen Lautsprecher (319), eine Videokamera (318), einen Infrarotanschluss (320) zum Empfang von Signalen, Befehlen und Bilderdateien zu ihrer Wiedergabe von einem Fernbedienungsteil aus aufweisen,
**dadurch gekennzeichnet,**
**dass** es mit einem zweiten Bildschirm (303) und Anschlüssen (311 bis 315) versehen ist, die zum Anschließen von externen Steuer- und Peripherieeinrichtungen dienen,
**dass** es mit einem zweiten Gehäuse (342) versehen ist,
**dass** die Bildschirme (303, 303') und einige der Funktionsbaugruppen (316 bis 322) im ersten Gehäuse (301) angeordnet sind, während die Steuereinheit (304), der Adapter (308) und die drahtlosen Endgeräte (309) in dem zweiten Gehäuses (342) eingebaut und mit den Funktionsbaugruppen (316 bis 322) aus dem ersten Gehäuse (301) mittels eines Kabels (343) verbunden sind,
**dass** die übrigen Funktionsbaugruppen (323 bis 329) und die Anschlüsse (311 bis 315) sind innerhalb des zweiten Gehäuses (342) angeordnet sind,
**dass** das erste Gehäuse (301) mit zwei gegenüberliegenden Platten (302, 302') ausgebildet ist, wobei auf jeder Platte (302, 302') Aufnahmestellen zum Einbau von mindestens einem Bildschirm (303, 303') und einigen der Funktionsbaugruppen (316 bis 322) vorgesehen sind und
**dass** das erste Gehäuse mit einer durchsichtigen Schutzumhüllung (341) versehen ist, welche mit der Geometrie des ersten Gehäuses (301) identisch ist.

29. Bildschirmgerät nach Anspruch 28,
**dadurch gekennzeichnet,**
**dass** das erste Gehäuse (301) als ein rechteckiges Parallelepiped ausgeführt ist und
**dass** die Aufnahmestellen zum Einbau der Bildschirme (303, 303') und der Funktionsbaugruppen (316 bis 322) auf den senkrechten Platten (302, 302') mit dem größten Flächeinhalt angeordnet sind.

30. Bildschirmgerät nach Anspruch 28,
**dadurch gekennzeichnet,**
**dass** das erste Gehäuse (301) als ein vierflächiges Prisma ausgeführt ist, dessen Seitenflächen die Form eines gleichschenkligen Trapezes aufweisen,
**dass** die Aufnahmestellen zum Einbau der Bildschirme (303, 303') und der Funktionsbaugruppen (316 bis 328) auf den schrägen Platten (332, 332') angeordnet sind, die sich hypothetisch außerhalb des Gehäuses (301) kreuzen und
**dass** dabei ihre Neigungswinkel (β, β')in Bezug auf die hypothetische senkrechte Ebene, die durch die imaginäre Schnittlinie der Platten (332, 332') verläuft, gleich sind.

31. Bildschirmgerät nach Anspruch 28,
**dadurch gekennzeichnet,**
**dass** das erste Gehäuse (301) eine beliebige Geometrie aufweist.

32. Bildschirmgerät nach Anspruch 28,
**dadurch gekennzeichnet,**
**dass** die drahtlosen Endgeräte (309) mit einer WiFi-Karte (338) und/oder mit einer WiMax-Einrichtung (334) und/oder mit einem GPRS-Modem (335) und/oder mit einem Fernseh-Tuner (336) und/oder mit einer Bluetooth-Einrichtung (337) ausgerüstet sind.

33. Bildschirmgerät nach Anspruch 28,
**dadurch gekennzeichnet,**
**dass** die Bildschirme (303, 303') als LCD bzw. Plasmabildschirme mit flacher oder konvex gewölbter Form ausgebildet sind.

34. Bildschirmgerät nach Anspruch 28,
**dadurch gekennzeichnet,**
**dass** als Funktionsbaugruppen (316 bis 329) mindestens folgende Baugruppen einbaubar sind:
ein Kapazitätsgeber (316) zur Überwachung der beweglichen Subjekte bzw. Objekte und/oder mindestens eine Photozelle (317) bzw. ein Optokoppler zur Überwachung der beweglichen Subjekte bzw. Objekte und/oder mindestens ein Schwingungsgeber (323) zur Vorbeugung von eventuellen Diebstahl- oder Sabotageversuchen (verändernde Eingriffe in das Produkt) und/oder Geber (324 bis 327) zur Kontrolle von Atmosphärendruck, Temperatur, Umgebungsstrahlung, Rauchdichte der Umgebung und/oder mindestens ein Geber (328) zur biologischen Umgebungskontrolle; und/oder mindestens ein Geber (329) zur chemischen Umgebungskontrolle; und/oder mindestens eine RFID-Einrichtung (322) (Sensor/Scanner) zum Fernablesen der Magnet-Etiketten und Chips.

35. Bildschirmgerät nach Anspruch 28,
**dadurch gekennzeichnet,**
**dass** die Form und die Abmessungen der Anschlüsse (311 bis 315) das Anschließen von einer Maus und/oder einer Tastatur und/oder einer externen Speichereinheit und/oder einer Datenein- und Datenausgabeeinheit und/oder sonstiger Steuer- oder Peripherieeinrichtungen sicherstellen.

36. Bildschirmgerät nach Anspruch 28,
**dadurch gekennzeichnet,**
**dass** es mit einem Energiespeicher (339) und einer unabhängigen Stromversorgung in Form von Solarbatterien versehen ist.
